(19) Europäisches Patentamt
European Patent Office
Office européen des brevets

(11) **EP 3 861 281 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **19783465.8**

(22) Anmeldetag: **30.09.2019**

(51) Internationale Patentklassifikation (IPC):
**G01B 11/06** (2006.01)     **G01B 11/24** (2006.01)
**G01N 21/35** (2014.01)     **G01N 21/89** (2006.01)

(52) Gemeinsame Patentklassifikation (CPC):
**G01B 11/0625; B29C 48/92; G01N 21/412; G01N 21/8901; G01N 21/896; B29C 2948/92247; B29C 2948/92257; B29C 2948/926; B29C 2948/92742; B29C 2948/92752; G01B 11/24; G01N 21/35**

(86) Internationale Anmeldenummer:
**PCT/EP2019/076396**

(87) Internationale Veröffentlichungsnummer:
**WO 2020/070047 (09.04.2020 Gazette 2020/15)**

(54) **VERFAHREN UND VORRICHTUNG ZUM STEUERN EINER PRODUKTIONSANLAGE FÜR PLATTENFÖRMIGE ODER STRANGFÖRMIGE KÖRPER**

METHOD AND DEVICE FOR CONTROLLING A PRODUCTION SYSTEM FOR PLANAR OR STRAND-SHAPED BODIES

PROCÉDÉ ET DISPOSITIF DE COMMANDE D'UNE INSTALLATION DE PRODUCTION DE CORPS EN FORME DE PLAQUES OU DE TORONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2018 DE 102018124175**

(43) Veröffentlichungstag der Anmeldung:
**11.08.2021 Patentblatt 2021/32**

(73) Patentinhaber: **SIKORA AG**
**28307 Bremen (DE)**

(72) Erfinder:
• **SIKORA, Harald**
**28357 Bremen (DE)**
• **SCHALICH, Christian**
**27721 Ritterhude (DE)**

(74) Vertreter: **Hauck Patent- und Rechtsanwälte PartmbB**
**Postfach 11 31 53**
**20431 Hamburg (DE)**

(56) Entgegenhaltungen:
WO-A1-2013/007250     DE-A1- 102018 128 248
DE-B3- 102015 110 600     DE-U1- 202016 008 526
DE-U1- 202018 006 759     US-A1- 2009 045 536

• WIETZKE S ET AL: "Terahertz spectroscopy: A powerful tool for the characterization of plastic materials", SOLID DIELECTRICS (ICSD), 2010 10TH IEEE INTERNATIONAL CONFERENCE ON, IEEE, PISCATAWAY, NJ, USA, 4 July 2010 (2010-07-04), pages 1 - 4, XP031750520, ISBN: 978-1-4244-7945-0
• J. HAUCK ET AL: "Terahertz inline wall thickness monitoring system for plastic pipe extrusion", AIP CONFERENCE PROCEEDINGS, 1 January 2014 (2014-01-01), NEW YORK, US, pages 86 - 89, XP055648302, ISSN: 0094-243X, DOI: 10.1063/1.4873740

**Beschreibung**

Die Erfindung betrifft ein Verfahren zum Steuern einer Produktionsanlage für plattenförmige oder strangförmige Körper, bei dem der Körper entlang einer Förderrichtung durch einen Messbereich gefördert wird, bei dem der Körper in dem Messbereich mittels Messstrahlung im Gigahertz- oder Terahertzfrequenzbereich bestrahlt wird, wobei die Messstrahlung zumindest teilweise in den Körper eindringt, und bei dem von dem Körper reflektierte Messstrahlung detektiert wird und anhand der detektierten Messstrahlung der Brechungsindex des Körpers bestimmt wird.

Die Erfindung betrifft weiterhin eine Vorrichtung zum Steuern einer Produktionsanlage für plattenförmige oder strangförmige Körper, umfassend eine Fördereinrichtung zum Fördern des Körpers entlang einer Förderrichtung durch einen Messbereich der Vorrichtung, eine Sendeeinrichtung zum Bestrahlen des Körpers im Messbereich mit Messstrahlung im Gigahertz- oder Terahertzfrequenzbereich, wobei die Messstrahlung zumindest teilweise in den Körper eindringt, eine Detektionseinrichtung zum Detektieren der von dem Körper reflektierten Messstrahlung, eine Auswerteeinrichtung, die dazu ausgebildet ist, anhand der durch die Detektionseinrichtung detektierten Messstrahlung den Brechungsindex des Körpers zu bestimmen.

Beispielsweise aus DE 10 2016 103 298 A1 sind eine Terahertz-Messvorrichtung und ein Terahertz-Messverfahren zum Ermitteln mindestens einer Schichtdicke eines Prüfobjekts mittels Laufzeitmessung bekannt. Aus WO 2016/139155 A1 sind weiterhin eine Vorrichtung und ein Verfahren zum Messen des Durchmessers und/oder der Wanddicke eines Strangs auch bei unbekanntem Brechungsindex bekannt. Damit ist auch bei nicht oder nicht zuverlässig bekanntem Brechungsindex eine genaue Bestimmung des Durchmessers und der Wanddicke beispielsweise von Rohren möglich.

Aus DE 20 2018 006 144 U1 ist eine Vorrichtung zum Vermessen eines aus einer Extrusionsvorrichtung austretenden rohrförmigen Strangs bekannt, bei der mittels insbesondere Terahertzstrahlung der Durchmesser und/oder die Wandstärke und/oder Formabweichungen des rohrförmigen Strangs ermittelt werden können. Auf Grundlage der ermittelten Werte für Durchmesser und/oder der Wandstärke und/oder Formabweichungen kann eine Steuerung und/oder Regelung der Extrusionsvorrichtung erfolgen. Für die Bestimmung des Durchmessers bzw. der Wandstärke bzw. von Formabweichungen kann auch der Brechungsindex des Strangmaterials bestimmt werden.

Weiterhin sind aus DE 10 2015 110 600 B3 ein Verfahren und eine Vorrichtung zum Ermitteln einer Schichteigenschaft eines in einem Extrusionsprozess erzeugten Extrusionsprodukts durch Bestrahlen mit Terahertzstrahlung und Messen mindestens einer Zuführrate oder Zuführmenge des einem Extruder zugeführten Zuführmaterials bekannt. DE 10 2015 110 600 B3 befasst sich mit dem Problem, dass bei geschäumten Schichten des Extrusionsprodukts der von der Materialdichte abhängende Brechungsindex nicht bekannt ist. Für nicht-geschäumte Schichten wird der Brechungsindex gemäß DE 10 2015 110 600 B3 dagegen als bekannt angenommen. Um den Brechungsindex von geschäumten Schichten zu ermitteln, schlägt DE 10 2015 110 600 B3 vor, ergänzend zur Vermessung des Extrusionsprodukts mit Terahertzstrahlung Daten oder Messsignale über die dem Extrusionsprozess zugeführte Materialmenge heranzuziehen. Diese Materialmenge wird gemäß DE 10 2015 110 600 B3 gravimetrisch oder volumetrisch gewonnen. Der so ermittelte Brechungsindex der geschäumten Schicht soll eine Aussage über den Schäumungsgrad der geschäumten Schicht geben. Auf Grundlage des ermittelten Brechungsindex kann eine Regelung der Zuführrate des Extruders erfolgen, um einen gewünschten Schäumungsgrad zu erreichen. Gemäß DE 10 2015 110 600 B3 wird das Gewicht des dem Extruder als Granulat zugeführten Materials mit Hilfe einer Wiegevorrichtung gemessen. Das Volumen kann dabei allerdings nur bestimmt werden, wenn das spezifische Gewicht des Granulats bekannt und konstant ist. Beides ist in der Praxis oftmals nicht der Fall. Außerdem wird gemäß DE 10 2015 110 600 B3 der Materialeintrag zum Extruder gemessen und auf dieser Grundlage eine Vorhersage über den Brechungsindex eines von der Terahertzstrahlung bestrahlten Abschnitts des extrudierten Produkts gemacht. Aus dem Input des Extruders eine Aussage über den Brechungsindex eines bestimmten Abschnitts des durch den Extruder hergestellten Extrusionsprodukts zu treffen, setzt aber voraus, dass sich weder die Drehgeschwindigkeit noch die Abzugsgeschwindigkeit des Extruders, noch der Schrumpfungsgrad durch eine veränderte Temperatur bei der Extrusion, verändern. Diese Voraussetzungen liegen in der Praxis nicht zuverlässig vor, so dass das bekannte Verfahren mit einer entsprechenden Ungenauigkeit behaftet ist.

Während gemäß DE 10 2015 110 600 B3 der Brechungsindex einer geschäumten Schicht ermittelt und zur Regelung der Zuführrate zum Erreichen eines gewünschten Schäumungsgrads genutzt werden kann, geht DE 10 2015 110 600 B3 für nicht-geschäumte Schichten von einem bekannten Brechungsindex aus. In der Praxis ändert sich auch der Brechungsindex nicht-geschäumter Schichten allerdings aus unterschiedlichen Gründen. Solche Änderungen werden gemäß DE 10 2015 110 600 B3 nicht erkannt. Da darüber hinaus der Brechungsindex gemäß DE 10 2015 110 600 B3 indirekt volumetrisch oder gravimetrisch anhand des dem Extruder zur Extrusion zugeführten Materials erfolgt, ist eine Zuordnung zu einem bestimmten Abschnitt des aus dem Material extrudierten Körpers wie erläutert schwierig. Entsprechend ist auch die gemäß DE 10 2015 110 600 B3 vorgesehene Steuerung bzw. Regelung der Extrusionsanlage ungenau.

Darüber hinaus besteht ein Bedürfnis, mehr Informationen über den Produktionsprozess zu erlangen, um eine zielgerichtetere und genauere Steuerung der Produktionsanlage zu erreichen.

Aus US 2009/0045536 A1 sind eine Vorrichtung und ein Verfahren zum Messen der Dickenverteilung eines quer zu einer Förderrichtung gestreckten extrudierten Bands mittels beispielsweise Infrarotstrahlung bekannt. Anhand der Absorption der Infrarotstrahlung kann auf die Dicke des Bandes geschlossen werden. Bei unerwünschten Dickenabweichungen quer zur Förderrichtung des Bands kann ein Extruder zur Korrektur angesteuert werden.

Aus WO 2013/007250 A1 sind ein Verfahren und eine Vorrichtung zur Herstellung eines extrudierten Strangprofils aus mehreren Mischungskomponenten bekannt. Dabei werden Koordinaten der Grenzschichten zumindest einzelner Mischungskomponenten des Strangprofils mittels eines das Strangprofil durchdringenden Messverfahrens erfasst. Zum Einsatz kommen kann elektromagnetische Strahlung. Aufgrund der erfassten Messwerte kann zum Beispiel die Extruderdrehzahl geregelt oder die Werkzeugkontur eingestellt werden, um beispielsweise die Kontur der Extrusionswerkzeuge zu verändern.

Aus WIETZKE S ET AL: "Terahertz spectroscopy: A powerful tool for the characterization of plastic materials" ist ein Terahertz-Spektroskopieverfahren bekannt für eine zerstörungsfreie und berührungslose Analyse von Makromolekülen zur Überwachung einer Verarbeitung von Kunststoff. Mittels der Terahertzstrahlung sollen zum Beispiel ein Fülleranteil oder ein Wasseranteil gemessen werden.

Aus J. HAUCK ET AL: "Terahertz inline wall thickness monitoring system for plastic pipe extrusion" ist außerdem ein Verfahren zum Inlinemessen der Wanddicke von extrudierten Kunststoffrohren mit Terahertzstrahlung bekannt. Damit soll auch die Vermessung von Mehrschichtsystemen oder geschäumten Rohren möglich sein.

Ausgehend von dem erläuterten Stand der Technik liegt der Erfindung die Aufgabe zugrunde, die Steuerung einer Produktionsanlage für plattenförmige oder strangförmige Körper zu verbessern.

Die Erfindung löst die Aufgabe durch die Merkmale der unabhängigen Ansprüche 1 und 10. Vorteilhafte Ausgestaltungen finden sich in den abhängigen Ansprüchen, der Beschreibung und den Figuren.

Für ein Verfahren der eingangs genannten Art löst die Erfindung die Aufgabe dadurch, dass auf Grundlage der Brechungsindexbestimmung mindestens ein Produktionsparameter der Produktionsanlage gesteuert wird, wobei der Brechungsindex zu mehreren Zeitpunkten während des Förderns des Körpers durch den Messbereich bestimmt wird und der mindestens eine Produktionsparameter aufgrund einer zeitlichen Änderung des Brechungsindex gesteuert wird und/oder wobei Messstrahlung auf verschiedene Orte des Körpers gestrahlt wird, wobei der Brechungsindex an den verschiedenen Orten des Körpers bestimmt wird und der mindestens eine Produktionsparameter aufgrund einer räumlichen Änderung des Brechungsindex gesteuert wird.

Für eine Vorrichtung der eingangs genannten Art löst die Erfindung die Aufgabe dadurch, dass eine Steuereinrichtung vorgesehen ist, die dazu ausgebildet ist, auf Grundlage der Brechungsindexbestimmung mindestens einen Produktionsparameter der Produktionsanlage zu steuern, wobei die Auswerteeinrichtung dazu ausgebildet ist, den Brechungsindex zu mehreren Zeitpunkten während des Förderns des Körpers durch den Messbereich zu bestimmen, wobei die Steuereinrichtung dazu ausgebildet ist, den mindestens einen Produktionsparameter aufgrund einer zeitlichen Änderung des Brechungsindex zu steuern und/oder wobei die Sendeeinrichtung dazu ausgebildet ist, Messstrahlung auf verschiedene Orte des Körpers zu strahlen, wobei die Auswerteeinrichtung dazu ausgebildet ist, den Brechungsindex an den verschiedenen Orten des Körpers zu bestimmen, und wobei die Steuereinrichtung dazu ausgebildet ist, den mindestens einen Produktionsparameter aufgrund einer räumlichen Änderung des Brechungsindex zu steuern.

Bei den in der Produktionsanlage hergestellten strangförmigen oder plattenförmigen Körpern kann es sich zum Beispiel um Körper aus Kunststoff oder Glas handeln. Der Körper kann insbesondere ein nicht-geschäumter Körper sein, der also keinen geschäumten Anteil, beispielsweise eine geschäumte Schicht, aufweist. Bei dem strangförmigen Körper kann es sich zum Beispiel um einen rohrförmigen Körper handeln, zum Beispiel ein Kunststoff- oder Glasrohr. Bei dem plattenförmigen Körper kann es sich zum Beispiel um eine Kunststoff- oder Glasplatte handeln. Der in der Produktionsanlage hergestellte Körper kann zum Zeitpunkt der erfindungsgemäßen Messung seine endgültige Formgebung bereits (im Wesentlichen) vollständig erhalten haben. Die Formgebung kann zum Zeitpunkt der Messung aber auch noch nicht abgeschlossen sein. Der Körper kann zum Zeitpunkt der Messung noch sehr hohe Temperaturen von beispielsweise über 2000°C besitzen, insbesondere wenn es sich um einen Glaskörper handelt. Der Körper wird insbesondere in Längsrichtung durch den Messbereich gefördert und dort mit Gigahertz- oder Terahertz-Messstrahlung bestrahlt. Gerade in Produktionsanlagen der hier betroffenen Art herrschen schwierige Messbedingungen. Dies gilt besonders bei einer frühzeitigen Messung des Körpers noch während seiner endgültigen Formgebung oder wenn seine Formgebung gerade abgeschlossen ist. Dies ist grundsätzlich wünschenswert, um frühzeitig auf etwaige unzulässige Abweichungen der Produktionsanlage reagieren zu können und unnötigen Ausschuss zu vermeiden. Allerdings besteht in diesem Messbereich eine hohe Gefahr durch Verschmutzungen aus dem Produktionsprozess. Darüber hinaus wird zur Kühlung des Körpers oder von Bestandteilen der Produktionsanlage häufig Kühlflüssigkeit, wie Kühlwasser, auf den Körper oder Bestandteile der Produktionsanlage aufgebracht. Dies führt zu Spritzwasser und Dampfentwicklung. Optische Messverfahren, beispielsweise mit Laserlicht, besitzen in solchen Messumgebungen grundsätzlich Probleme. Solche Probleme können durch den erfindungsgemäßen Einsatz von Gigahertz- oder Terahertz-Messstrahlung vermieden werden, da solche Messstrahlung gegenüber schwierigen Messumgebungen der erläuterten Art grundsätzlich weitgehend unempfindlich ist.

Die Messstrahlung wird von einer Sendeeinrichtung ausgesendet und auf den zu messenden Körper geleitet. Dabei dringt die Messstrahlung zumindest teilweise, vorzugsweise vollständig in den Körper ein. Insbesondere kann die Messstrahlung den Körper vollständig durchstrahlen. An Grenzflächen des Körpers wird die Messstrahlung reflektiert und die reflektierte Messstrahlung wird von einer Empfangseinrichtung empfangen. Die Sendeeinrichtung und die Empfangseinrichtung können in besonders praxisgemäßer Weise in einen Transceiver kombiniert sein. Selbstverständlich können auch mehrere Sendeeinrichtungen und mehrere Empfangseinrichtungen vorgesehen sein, die den Körper beispielsweise von unterschiedlichen Richtungen bestrahlen und die reflektierte Messstrahlung empfangen. Sofern mehrere Sendeeinrichtungen und Empfangseinrichtungen vorgesehen sind, können diese in besonders praxisgemäßer Weise jeweils paarweise zu einem Transceiver kombiniert sein.

Auf Grundlage der Detektion der reflektierten Messstrahlung können der Brechungsindex des Materials des Körpers und die Absorption der Messstrahlung durch den Körper bestimmt werden. Während DE 10 2015 110 600 B3 für nicht-geschäumte Schichten von einem bekannten Brechungsindex ausgeht, berücksichtigt die Erfindung, dass sich der Brechungsindex insbesondere auch nicht-geschäumter Materialien in der Praxis aus unterschiedlichen Gründen ändern kann. So werden dem Extrusionsmaterial für Extrusionsprodukte, wie zum Beispiel Kunststoffrohre, aus unterschiedlichen Gründen Additive zugesetzt, beispielsweise um die Leitfähigkeit des Materials zu verringern, als Sonnenschutz oder ähnliches. Anwender von Extrusionsanlagen nutzen dazu teilweise vorgemischte Materialmischungen, in denen die Additive bereits herstellerseitig zugesetzt werden. Teilweise stellen die Anwender die Materialmischungen aber auch selbst her, indem sie dem Grundmaterial selbst Additive zusetzen. Gerade in letzterem Fall kann es zu unerwünschten Variationen der zugesetzten Additivmenge kommen. Verändert sich der Anteil eines dem Extrusionsmaterial zugesetzten Additivs, kann dies erfindungsgemäß anhand der Brechungsindexbestimmung schnell und zuverlässig erkannt werden und durch einen entsprechenden Steuereingriff in die Produktionsanlage behoben werden.

Die Bestimmung des Brechungsindex bzw. der Absorption erfolgt dabei erfindungsgemäß insbesondere direkt anhand der von dem Körper reflektierten Messstrahlung, insbesondere ausschließlich anhand der von dem Körper reflektierten Messstrahlung. Für die Bestimmung des Brechungsindex bzw. der Absorption müssen erfindungsgemäß keine gravimetrischen oder volumetrischen Messungen erfolgen, beispielsweise eines in einer Extrusionsvorrichtung extrudierten Materials, wie dies in DE 10 2015 110 600 B3 noch vorgesehen ist. Damit ist erfindungsgemäß eine Zuordnung des ermittelten Brechungsindex zu einem bestimmten Abschnitt des Körpers zuverlässiger und dadurch eine genauere Steuerung möglich.

Erfindungsgemäß wird auf Grundlage der Brechungsindexbestimmung mindestens ein Produktionsparameter der Produktionsanlage gesteuert. Der Erfindung liegt die überraschende Erkenntnis zugrunde, dass der Brechungsindex und/oder der Absorptionsgrad des vermessenen Körpers, insbesondere eine zeitliche oder räumliche Veränderung dieser Werte, Informationen über den Produktionsprozess liefern, auf deren Grundlage eine Steuerung des Produktionsprozesses möglich ist. Eine Bestrahlung mit Gigahertz- oder Terahertzstrahlung erfolgt in der Praxis oft ohnehin, um geometrische Parameter des Körpers zu bestimmen, wie beispielsweise Oberflächenkontur, Durchmesser, Dicke bzw. Wanddicke(n). Entsprechend kann erfindungsgemäß (durch die Auswerteeinrichtung) auch mindestens ein geometrischer Parameter des Körpers bestimmt werden, wie beispielsweise seine Oberflächenkontur, sein Durchmesser, seine Dicke bzw. seine Wanddicke(n). Wie erläutert, kann dabei auch der Brechungsindex für eine genaue Bestimmung der geometrischen Parameter ohnehin ermittelt werden. Erfindungsgemäß wird die Gigahertz- oder Terahertzstrahlung und gegebenenfalls die Bestimmung von Brechungsindex und/oder Absorption nun weiterhin genutzt, um Rückschlüsse auf den Prozess zu treffen und den Prozess entsprechend zu steuern, wobei diese Steuerung insbesondere automatisch erfolgen kann. Auf diese Weise ist erfindungsgemäß in einfacher und zuverlässiger Art eine Verbesserung des Produktionsprozesses möglich.

Der Erfindung basiert insbesondere auf der Erkenntnis, dass eine zeitliche oder räumliche Veränderung des Brechungsindex und/oder der Absorption ein wichtiger Parameter für die Steuerung bzw. Regelung der Produktionsanlage ist. Dazu wird erfindungsgemäß der Brechungsindex zu mehreren Zeitpunkten und/oder für mehrere Orte des Körpers bestimmt, insbesondere über den Umfang des Körpers verteilt. Aus einer Veränderung der ermittelten zeitlich oder räumlich verteilten Daten für den Brechungsindex wird erfindungsgemäß auf unerwünschte Veränderungen des Produktionsprozesses geschlossen. Auf dieser Grundlage wird die Produktionsanlage gesteuert.

Die Ermittlung von Brechungsindex bzw. Absorption kann zum Beispiel in regelmäßigen Zeitabständen erfolgen während der Körper durch den Messbereich gefördert wird. Auf diese Weise kann ein Trend dieser Daten erkannt werden. Daraus können erforderliche Steuereingriffe in die Produktionsanlage abgeleitet werden. Beispielsweise ein mit der Zeit abfallender oder ansteigender Wert vom Brechungsindex bzw. Absorption deuten auf unerwünschte Veränderungen des Produktionsprozesses hin.

Bei einem strangförmigen Körper kann die Messstrahlung insbesondere auf unterschiedliche über den Umfang des Körpers verteilte Orte auf diesen gestrahlt werden. Es können bei der vorgenannten Ausgestaltung mehrere Sendeeinrichtungen und Empfangseinrichtungen, beispielsweise mehrere Transceiver, vorgesehen sein, die so angeordnet sind, dass sie Messstrahlung auf unterschiedliche Orte des Körpers leiten und die jeweils reflektierte Messstrahlung empfangen. Beispielsweise können mehrere Sendeeinrichtungen und Empfangseinrichtungen, beispielsweise mehrere Transceiver, über den Umfang eines strangförmigen Körpers verteilt angeordnet sein. Es wäre aber auch denkbar, dass mindestens eine Sendeeinrichtung und mindestens eine Empfangseinrichtung, beispielsweise mindestens ein Transceiver, räumlich veränderbar angeordnet sind, zum Beispiel drehbar um einen strangförmigen Körper. Durch die vorgenannte Ausgestaltung ist die Erkennung einer räumlichen Verteilung des Brechungsindex bzw. der Absorption möglich. Daraus können wiederum erforderliche Steuereingriffe in die Produktionsanlage abgeleitet werden. Beispielsweise ein systematisches Verändern der Werte von Brechungsindex bzw. Absorption mit dem Ort deutet auf einen fehlerhaften Produktionsprozess hin. Zum Beispiel wenn extrudiertes Kunststoffmaterial unerwünscht fließt, kann dadurch der Brechungsindex bzw. die Absorption beispielsweise an der Unterseite des strangförmigen Körpers anders sein als an seiner Oberseite. Dies kann erkannt und bei der Steuerung des Produktionsprozesses berücksichtigt werden.

Die Absorption kann zum Beispiel aus einem Vergleich der Intensität der von der Sendeeinrichtung ausgesandten Messstrahlung mit der Intensität der nach der Reflexion beispielsweise an einer der Sende- und Empfangseinrichtungen abgewandten, rückseitigen Grenzfläche des Körpers empfangenen Messstrahlung bestimmt werden. Die Brechungsindexbestimmung kann beispielsweise erfolgen, wie dies in WO 2016/139155 A1 erläutert ist. Dabei kann beispielsweise die Laufzeit der von der Sendeeinrichtung ausgesandten Messstrahlung durch den Messbereich bei in den Messbereich angeordnetem Körper mit der Laufzeit der Messstrahlung durch den Messbereich ohne darin angeordneten Körper verglichen werden. Aus der Laufzeitänderung lässt sich dann mathematisch der Brechungsindex des Materials bestimmen, wie unten noch näher erläutert werden wird. Hierfür können zum Beispiel an gegenüberliegenden Seiten des Messbereichs eine Sendeeinrichtung und eine Empfangseinrichtung angeordnet sein. Es wäre jedoch auch möglich, beispielsweise auf einer Seite des Messbereichs eine Sendeeinrichtung und eine Empfangseinrichtung anzuordnen und auf einer gegenüberliegenden Seite des Messbereichs einen Reflektor anzuordnen.

Wie bereits erwähnt, kann die Bestimmung des Brechungsindex aus einem Vergleich der Laufzeit der von der Sendeeinrichtung ausgesandten Messstrahlung durch den Messbereich bei in dem Messbereich angeordnetem Körper mit der Laufzeit der Messstrahlung durch den Messbereich ohne darin angeordneten Körper erfolgen. Insbesondere wenn der Körper ein rohrförmiger Körper ist, kann für die Bestimmung des Brechungsindex weiterhin die Laufzeit der von der Sendeeinrichtung ausgesandten Messstrahlung durch einen ersten, der Sendeeinrichtung zugewandten Wandabschnitt, und durch einen zweiten, der Sendeeinrichtung abgewandten Wandabschnitt berücksichtigt werden.

Wie in WO 2016/139155 A1 erläutert, kann beispielsweise bei rohrförmigen Körpern die Wanddicke $W_{d1}$ eines der mindestens einen Sendeeinrichtung zugewandten Wandabschnitts des Körpers bzw. die Wanddicke $W_{d2}$ des der mindestens einen Sendeeinrichtung abgewandten Wandabschnitts des Körpers nach folgenden Formeln bestimmt werden:

$$ W_{d1} = \frac{1}{2}\left(\Delta T_{wd1} - \frac{\Delta T_R \cdot \Delta T_{wd1}}{\Delta T_{wd1} + \Delta T_{wd2}}\right) c $$

$$ W_{d2} = \frac{1}{2}\left(\Delta T_{wd2} - \frac{\Delta T_R \cdot \Delta T_{wd2}}{\Delta T_{wd2} + \Delta T_{wd1}}\right) c $$

mit:

$\Delta T_{wd1}$    Laufzeitunterschied zwischen an der der mindestens einen Sendeeinrichtung zugewandten äußeren Grenzfläche und an der der mindestens einen Sendeeinrichtung abgewandten inneren Grenzfläche des der mindestens einen Sendeeinrichtung zugewandten Wandabschnitts des Körpers reflektierter Messstrahlung,

$\Delta T_{wd2}$    Laufzeitunterschied zwischen an der der mindestens einen Sendeeinrichtung zugewandten inneren Grenzfläche und an der der mindestens einen Sendeeinrichtung abgewandten äußeren Grenzfläche des der mindestens einen Sendeeinrichtung abgewandten Wandabschnitts des Körpers reflektierter Messstrahlung,

$\Delta T_R$    Durch das Material des durch die Vorrichtung geführten Körpers verursachte Laufzeitänderung der von der mindestens einen Sendeeinrichtung ausgesandten und nach Durchstrahlen des Körpers von der mindestens einen Empfangseinrichtung empfangenen Messstrahlung,

c    Ausbreitungsgeschwindigkeit der Messstrahlung in Luft

Beispielsweise die obige Gleichung für $W_{d1}$ lässt sich umstellen zu:

$$W_{d1} = \frac{1}{2}\Delta T_{wd1} \cdot c \left(1 - \frac{\Delta T_R}{\Delta T_{wd1} + \Delta T_{wd2}}\right)$$

Weiterhin gilt:

$$W_{d1} = \frac{1}{2}\Delta T_{wd1} \cdot c_K$$

mit:

$c_K$ Ausbreitungsgeschwindigkeit der Messstrahlung in dem Körper

Somit gilt weiter:

$$c_K = c \left(1 - \frac{\Delta T_R}{\Delta T_{wd1} + \Delta T_{wd2}}\right)$$

Damit gilt für den Brechungsindex n des rohrförmigen Körpers:

$$n = \frac{c}{c_K} = \frac{1}{\left(1 - \frac{\Delta T_R}{\Delta T_{wd1} + \Delta T_{wd2}}\right)}$$

Der Brechungsindex des rohrförmigen Körpers lässt sich somit rechnerisch unter Berücksichtigung der durch den Körper verursachten Laufzeitänderung sowie der Laufzeiten der Messstrahlung durch die ersten und zweiten Wandabschnitte bestimmen. Volumetrische oder gravimetrische Messungen sind dazu nicht erforderlich.

Nach einer weiteren Ausgestaltung kann anhand der zu mehreren Zeitpunkten während des Förderns des Körpers durch den Messbereich bestimmten Werte für Brechungsindex und/oder Absorption ein Datentrend erstellt werden. Die Produktionsanlage kann dann auf Grundlage einer erkannten zeitlichen Veränderung des Datentrends gesteuert werden, beispielsweise einem Abfallen oder Ansteigen des Datentrends über einen bestimmten Zeitraum. Beispielsweise kann hierzu der Datentrend nach der Zeit abgeleitet werden. Über- oder unterschreitet der berechnete Wert der Ableitung einen vorgegebenen Sollwert, kann dann ein Steuereingriff in die Produktionsanlage erfolgen.

Nach einer weiteren Ausgestaltung kann anhand der an den verschiedenen Orten des Körpers bestimmten Werte für Brechungsindex und/oder Absorption eine räumliche Werteverteilung erstellt werden. Die Produktionsanlage kann dann auf Grundlage einer erkannten räumlichen Veränderung der Werteverteilung gesteuert werden. Wie bereits erläutert, kann der Brechungsindex und/oder die Absorption insbesondere an mehreren Orten über den Umfang eines beispielsweise rohrförmigen Körpers verteilt bestimmt werden. Es kann so eine räumliche Verteilung der ermittelten Werte von Brechungsindex und/oder Absorption über den Umfang des rohrförmigen Körpers ermittelt werden. Erfolgt hier eine insbesondere systematische Veränderung, beispielsweise erheblich höhere Werte von Brechungsindex und/oder Absorption an der Unterseite des Körpers verglichen mit der Oberseite, kann auf ein unerwünschtes Fließen des Materials nach unten geschlossen werden, also ein sogenanntes Sagging. Dem kann dann durch entsprechende Steuereingriffe in den Produktionsprozess entgegengewirkt werden. Wiederum kann beispielsweise eine räumliche Ableitung der Werteverteilung erfolgen. Über- oder unterschreitet der berechnete Wert der Ableitung einen vorgegebenen Sollwert, kann dann ein Steuereingriff in die Produktionsanlage erfolgen.

Nach einer weiteren Ausgestaltung kann der Körper aus einem Kunststoffmaterial bestehen, wobei die Produktionsanlage eine Extrusionsvorrichtung zur Extrusion des Kunststoffmaterials umfasst, wobei auf Grundlage der Brechungsindexbestimmung und/oder der Absorptionsbestimmung mindestens ein Produktionsparameter der Extrusionsvorrichtung gesteuert wird. Als Produktionsparameter kann nach einer weiteren diesbezüglichen Ausgestaltung eine Ausstoßleistung der Extrusionsvorrichtung gesteuert werden. Alternativ oder zusätzlich ist es auch möglich, dass als Produktionsparameter ein Mischungsverhältnis von mindestens zwei der Extrusionsvorrichtung zugeführten zu extrudierenden Materialien gesteuert wird. In Extrusionsvorrichtungen können zwei Materialien zu einer zu extrudierenden Mischung vermischt werden. Dabei handelt es sich häufig um Beimischungen in ein Hauptkunststoffmaterial. Beispielsweise können Graphit oder Glasfasern in einen Trägerkunststoff, wie Polypropylen (PP) oder Polyethylen (PE) gemischt werden. Solche Beimischungen liegen häufig nur mit geringen Anteilen von zum Beispiel unter 1 Gew.-% vor. Dadurch ist die Einstellung des Mischungsverhältnisses schwierig und eine Detektion eines falschen Mischungsverhältnisses häufig nicht zuverlässig möglich. Auch variieren beispielsweise von unterschiedlichen Herstellern bezogene Fertigmischungen nicht unerheblich hinsichtlich des Mischungsverhältnisses. Je nach Material haben solche Beimischungen erheblichen Einfluss zum Beispiel auf den Brechungsindex. Besonders gilt dies für Materialien, deren Brechungsindex stark von dem Brechungsindex des Trägermaterials abweicht. Dies ist zum Beispiel bei Graphit- oder Glasfaserbeimischungen in Trägerkunststoffe, wie PP oder PE, der Fall. Dies macht sich die vorgenannte Ausgestaltung zunutze. So wurde überraschend festgestellt, dass auf Grundlage der erfindungsgemäßen Bestimmung des Brechungsindex bzw. der Absorption ein unzulässiges Abweichen des Mischungsverhältnisses von einem vorgegebenen Mischungsverhältnis auch bei kleinen Beimischungsanteilen zuverlässig erkannt werden kann und entsprechend in den Mischprozess in der Extrusionsvorrichtung eingegriffen werden kann.

Wie bereits erläutert, wirken sich insbesondere einem in einer Extrusionsanlage einem Grundmaterial zugesetzte Additive teils erheblich auf den Brechungsindex bzw. die Absorption des Materials aus. Nach einer weiteren Ausgestaltung kann entsprechend anhand der ermittelten Werte für Brechungsindex und/oder Absorption ein Anteil eines dem für die Produktion des Körpers genutzten Materials zugesetzten Additivs bestimmt werden und die Produktionsanlage auf Grundlage des bestimmten Anteils des Additivs gesteuert werden. Auf diese Weise kann sichergestellt werden, dass jederzeit das gewünschte Mischungsverhältnis zwischen Grundmaterial und Additiv eingehalten wird.

Nach einer weiteren Ausgestaltung kann der mindestens eine Produktionsparameter der Produktionsanlage auf Grundlage der Brechungsindexbestimmung und/oder der Absorptionsbestimmung in einem geschlossenen Regelkreis geregelt werden. Es handelt sich dann um eine sogenannte Closed Loop Control. Die Steuereinrichtung bildet also eine Regeleinrichtung. Es kann insbesondere eine vollautomatische Regelung erfolgen, bei der kein manueller Eingriff erforderlich ist. Die Regeleinrichtung kann zum Beispiel einen ermittelten Wert für den Brechungsindex und/oder die Absorption als Regelgröße erhalten. Diese wird mit einem Sollwert für den Brechungsindex und/oder die Absorption als Führungsgröße verglichen. Ergibt der Vergleich eine Regelabweichung, kann die Regeleinrichtung Produktionsparameter, zum Beispiel ein Mischungsverhältnis einer Extrusionsvorrichtung, ansteuern bis die Regelabweichung wieder in einem zulässigen Bereich liegt. Sämtliche in diesem Zusammenhang genannten Ausgestaltungen zur Steuerung der Produktionsanlage können entsprechend auch für eine Regelung der Produktionsanlage zum Einsatz kommen.

Das erfindungsgemäße Verfahren kann mit einer erfindungsgemäßen Vorrichtung durchgeführt werden. Entsprechend kann die erfindungsgemäße Vorrichtung zur Durchführung des erfindungsgemäßen Verfahrens ausgebildet sein.

Die Erfindung betrifft auch eine Produktionsanlage für plattenförmige oder strangförmige Körper, umfassend eine erfindungsgemäße Vorrichtung zum Steuern der Produktionsanlage, und umfassend eine Fördereinrichtung zum Fördern des Körpers entlang einer Förderrichtung durch den Messbereich der erfindungsgemäßen Vorrichtung. Die erfindungsgemäße Vorrichtung bzw. die erfindungsgemäße Produktionsanlage kann dabei auch den plattenförmigen oder strangförmigen Körper umfassen.

Ein Ausführungsbeispiel der Erfindung wird nachfolgend anhand von Figuren näher erläutert. Es zeigen schematisch:

Figur 1 ein Diagramm, in dem ein mit einer erfindungsgemäßen Vorrichtung bzw. einem erfindungsgemäßen Verfahren ermittelter Brechungsindex eines rohrförmigen Körpers über der Zeit aufgetragen ist,

Figur 2 ein Diagramm, in dem ein mit einer erfindungsgemäßen Vorrichtung bzw. einem erfindungsgemäßen Verfahren ermittelter Brechungsindex über einen Drehwinkel um den rohrförmigen Körper aufgetragen ist,

Figur 3 eine Darstellung einer erfindungsgemäßen Vorrichtung mit dem im Querschnitt dargestellten rohrförmigen Körper.

Soweit nichts anderes angegeben ist, bezeichnen in den Figuren gleiche Bezugszeichen gleiche Gegenstände.

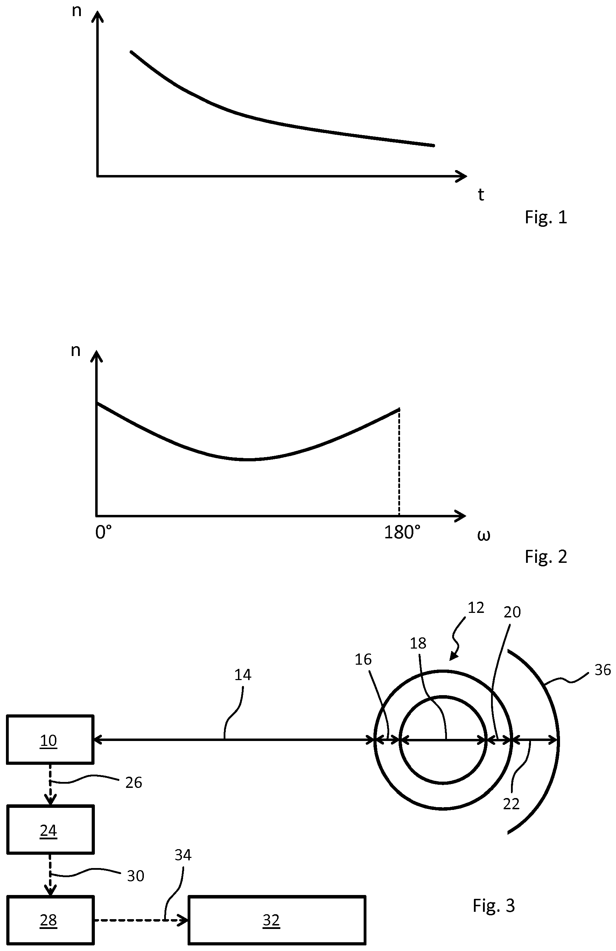

In dem Diagramm der Figur 1 ist für einen mit einer erfindungsgemäßen Vorrichtung bzw. dem erfindungsgemäßen Verfahren in einer Produktionsanlage vermessenen Körper, beispielsweise einen rohrförmigen Körper, ein zeitlicher Verlauf des erfindungsgemäß bestimmten Brechungsindex dargestellt. In dem Diagramm ist der Brechungsindex n über der Zeit t aufgetragen. In dem dargestellten Beispiel fällt der Brechungsindex n mit der Zeit ab.

In Figur 2 ist wiederum mit einer erfindungsgemäßen Vorrichtung bzw. dem erfindungsgemäßen Verfahren in einer Produktionsanlage vermessenen insbesondere rohrförmigen Körper ermittelter räumlicher Verlauf des Brechungsindex dargestellt. Insbesondere ist für das Diagramm der Figur 2 der Brechungsindex an verschiedenen Orten über den Umfang des rohrförmigen Körpers verteilt ermittelt worden. Hierzu ist beispielsweise eine als Transceiver kombinierte Sende- und Empfangseinrichtung über den Umfang des rohrförmigen Körper gedreht worden, wobei jeweils Messstrahlung auf den rohrförmigen Körper ausgesandt und von diesem reflektierte Messstrahlung von der Empfangseinrichtung gemessen wurde. In dem Diagramm der Figur 2 ist der Brechungsindex n über dem Drehwinkel ω der Sende- und Empfangseinrichtung dargestellt. Dabei ist zu erkennen, dass der Brechungsindex in einem Winkelbereich zwischen 0° und 180° zunächst ein Minimum durchschreitet und sich dann wieder auf seinen Ursprungswert annähert.

In Figur 3 ist beispielhaft eine erfindungsgemäße Vorrichtung gezeigt, mit der die Werte gemäß den Diagrammen nach den Figuren 1 und 2 ermittelt werden können. Die Vorrichtung umfasst in dem gezeigten Beispiel einen Transceiver 10, umfassend eine Sendeeinrichtung und eine Empfangseinrichtung für Gigahertz- oder Terahertzstrahlung. Die Messstrahlung im Gigahertz- oder Terahertzfrequenzbereich wird von dem Transceiver 10 auf einen entlang seiner Längsrichtung durch einen Messbereich der Vorrichtung geförderten rohrförmigen Körper 12 ausgesandt, wie durch den Pfeil 14 in Figur 3 veranschaulicht. Die Messstrahlung durchdringt den rohrförmigen Körper 12 und wird an verschiedenen Grenzflächen des rohrförmigen Körpers 12 reflektiert, wie durch die Pfeile 14, 16, 18 und 20 veranschaulicht. Ein gewisser Strahlungsanteil tritt aus dem rohrförmigen Körper 12 wieder aus, wie durch den Pfeil 22 in Figur 3 veranschaulicht. Dieser Strahlungsanteil wird in dem dargestellten Beispiel von einem Reflektor 34 reflektiert, so dass dieser Strahlungsanteil zurück zu dem Transceiver 10 gelangt. Die an den Grenzflächen reflektierte Messstrahlung wird ebenfalls wiederum von dem Transceiver 10 empfangen. Die Messdaten des Transceivers 10 werden an eine Auswerteeinrichtung 24 übergeben, wie in Figur 3 durch den gestrichelten Pfeil 26 veranschaulicht. Die Auswerteeinrichtung 24 kann beispielsweise in der oben erläuterten Weise den Brechungsindex des Materials des rohrförmigen Körpers 12 bestimmen. Diese Brechungsindexbestimmung kann während des Förderns des rohrförmigen Körpers 12 durch den Messbereich der Vorrichtung zum Beispiel über einen vorgegebenen Zeitraum in regelmäßigen Abständen wiederholt stattfinden, woraus ein Diagramm wie in Figur 1 dargestellt ermittelt werden kann. Auch wäre es denkbar, beispielsweise den Transceiver 10 (und den Reflektor 34) um den rohrförmigen Körper 12 zu drehen, während der Drehung Messstrahlung auf unterschiedliche Orte über den Umfang des rohrförmigen Körpers 12 verteilt zu senden und die reflektierte Messstrahlung jeweils zu empfangen und hieraus eine räumliche Verteilung des Brechungsindex zu ermitteln, wie sie in dem Diagramm der Figur 2 dargestellt ist. Insbesondere wenn die Bestimmung des Brechungsindex dabei in der oben erläuterten Weise erfolgt, wiederholen sich die Messwerte mit einer Winkelperiode von 180°.

Die durch die Auswerteeinrichtung 24 ermittelten Werte für den Brechungsindex können in dem dargestellten Beispiel einer Regeleinrichtung 28 zugeleitet werden, wie in Figur 3 durch den gestrichelten Pfeil 30 veranschaulicht. Die Regeleinrichtung 28 kann mindestens einen Produktionsparameter der in Figur 3 äußerst schematisch bei dem Bezugszeichen 32 dargestellten Produktionsanlage regeln, wie in Figur 3 durch den gestrichelten Pfeil 34 veranschaulicht. Bei dem mindestens einen Produktionsparameter kann es sich beispielsweise um ein Mischungsverhältnis zweier einer Extrusionsvorrichtung der Produktionsanlage zugeführten Materialien handeln.

Bezugszeichenliste

| n | Brechungsindex |
| t | Zeit |
| ω | Drehwinkel |
| 10 | Transceiver |
| 12 | Rohrförmiger Körper |
| 14 | Pfeil |
| 16 | Pfeil |
| 18 | Pfeil |
| 20 | Pfeil |
| 22 | Pfeil |
| 24 | Auswerteeinrichtung |
| 26 | Gestrichelter Pfeil |
| 28 | Regeleinrichtung |
| 30 | Gestrichelter Pfeil |
| 32 | Produktionsanlage |
| 34 | Gestrichelter Pfeil |
| 36 | Reflektor |

**Patentansprüche**

1. Verfahren zum Steuern einer Produktionsanlage (32) für plattenförmige oder strangförmige Körper (12), bei dem der Körper (12) entlang einer Förderrichtung durch einen Messbereich gefördert wird, bei dem der Körper (12) in dem Messbereich mittels Messstrahlung im Gigahertz- oder Terahertzfrequenzbereich bestrahlt wird, wobei die Messstrahlung zumindest teilweise in den Körper (12) eindringt, und bei dem von dem Körper (12) reflektierte Messstrahlung detektiert wird, **dadurch gekennzeichnet, dass** anhand der detektierten Messstrahlung ohne gravimetrische oder volumetrische Messungen der Brechungsindex (n) des Körpers (12) bestimmt wird, dass auf Grundlage der Brechungsindexbestimmung mindestens ein Produktionsparameter der Produktionsanlage (32) gesteuert wird, wobei der Brechungsindex (n) zu mehreren Zeitpunkten während des Förderns des Körpers (12) durch den Messbereich bestimmt wird und der mindestens eine Produktionsparameter aufgrund einer zeitlichen Änderung des Brechungsindex (n) gesteuert wird und/oder wobei Messstrahlung auf verschiedene Orte des Körpers (12) gestrahlt wird, wobei der Brechungsindex (n) an den verschiedenen Orten des Körpers (12) bestimmt wird und der mindestens eine Produktionsparameter aufgrund einer räumlichen Änderung des Brechungsindex (n) gesteuert wird.

2. Verfahren nach Anspruch 1, **dadurch gekennzeichnet, dass** der Brechungsindex aus einem Vergleich der Laufzeit der von der Sendeeinrichtung ausgesandten Messstrahlung durch den Messbereich bei in dem Messbereich angeordnetem Körper mit der Laufzeit der Messstrahlung durch den Messbereich ohne darin angeordneten Körper bestimmt wird.

3. Verfahren nach Anspruch 2, **dadurch gekennzeichnet, dass** der Körper (12) ein rohrförmiger Körper (12) ist, und dass für die Bestimmung des Brechungsindex weiterhin die Laufzeit der von der Sendeeinrichtung ausgesandten Messstrahlung durch einen ersten, der Sendeeinrichtung zugewandten Wandabschnitt, und durch einen zweiten, der Sendeeinrichtung abgewandten Wandabschnitt berücksichtigt wird.

4. Verfahren nach einem der vorhergehenden Ansprüche, **dadurch gekennzeichnet, dass** anhand der detektierten Messstrahlung weiterhin die Absorption der Messstrahlung durch den Körper (12) bestimmt wird, **dadurch gekennzeichnet, dass** auf Grundlage der Absorptionsbestimmung mindestens ein Produktionsparameter der Produktionsanlage (32) gesteuert wird, wobei die Absorption zu mehreren Zeitpunkten während des Förderns des Körpers (12) durch den Messbereich bestimmt wird und der mindestens eine Produktionsparameter aufgrund einer zeitlichen Änderung der Absorption gesteuert wird und/oder wobei Messstrahlung auf verschiedene Orte des Körpers (12) gestrahlt wird, wobei die Absorption an den verschiedenen Orten des Körpers (12) bestimmt wird und der mindestens eine Produktionsparameter aufgrund einer räumlichen Änderung der Absorption gesteuert wird.

5. Verfahren nach einem der vorhergehenden Ansprüche, **dadurch gekennzeichnet, dass** anhand der zu mehreren Zeitpunkten während des Förderns des Körpers (12) durch den Messbereich bestimmten Werte für Brechungsindex und/oder Absorption ein Datentrend erstellt wird, und dass die Produktionsanlage auf Grundlage einer erkannten zeitlichen Veränderung des Datentrends gesteuert wird und/oder dass anhand der an den verschiedenen Orten des Körpers (12) bestimmten Werte für Brechungsindex und/oder Absorption eine räumliche Werteverteilung erstellt wird, und dass die Produktionsanlage auf Grundlage einer erkannten räumlichen Veränderung der Werteverteilung gesteuert wird.

6. Verfahren nach einem der vorhergehenden Ansprüche, **dadurch gekennzeichnet, dass** der Körper (12) aus einem Kunststoffmaterial besteht, wobei die Produktionsanlage (32) eine Extrusionsvorrichtung zur Extrusion des Kunststoffmaterials umfasst, und dass auf Grundlage der Brechungsindexbestimmung und/oder der Absorptionsbestimmung mindestens ein Produktionsparameter der Extrusionsvorrichtung gesteuert wird.

7. Verfahren nach Anspruch 6, **dadurch gekennzeichnet, dass** als Produktionsparameter eine Ausstoßleistung der Extrusionsvorrichtung gesteuert wird und/oder dass als Produktionsparameter ein Mischungsverhältnis von mindestens zwei der Extrusionsvorrichtung zugeführten zu extrudierenden Materialien gesteuert wird.

8. Verfahren nach einem der vorhergehenden Ansprüche, **dadurch gekennzeichnet, dass** anhand der ermittelten Werte für Brechungsindex und/oder Absorption ein Anteil eines dem für die Produktion des Körpers (12) genutzten Materials zugesetzten Additivs bestimmt wird, und dass die Produktionsanlage auf Grundlage des bestimmten Anteils des Additivs gesteuert wird.

9. Verfahren nach einem der vorhergehenden Ansprüche, **dadurch gekennzeichnet, dass** der mindestens eine Produktionsparameter der Produktionsanlage (32) auf Grundlage der Brechungsindexbestimmung und/oder der Absorptionsbestimmung in einem geschlossenen Regelkreis geregelt wird.

10. Vorrichtung zum Steuern einer Produktionsanlage (32) für plattenförmige oder strangförmige Körper (12), umfassend eine Fördereinrichtung zum Fördern des Körpers (12) entlang einer Förderrichtung durch einen Messbereich der Vorrichtung, eine Sendeeinrichtung zum Bestrahlen des Körpers (12) im Messbereich mit Messstrahlung im Gigahertz- oder Terahertzfrequenzbereich, wobei die Messstrahlung zumindest teilweise in den Körper (12) eindringt, eine Detektionseinrichtung zum Detektieren der von dem Körper (12) reflektierten Messstrahlung und eine Auswerteeinrichtung (24), **dadurch gekennzeichnet, dass** die Auswerteeinrichtung (24) dazu ausgebildet ist, anhand der durch die Detektionseinrichtung detektierten Messstrahlung ohne gravimetrische oder volumetrische Messungen den Brechungsindex (n) des Körpers (12) zu bestimmen, dass eine Steuereinrichtung vorgesehen ist, die dazu ausgebildet ist, auf Grundlage der Brechungsindexbestimmung mindestens einen Produktionsparameter der Produktionsanlage (32) zu steuern, wobei die Auswerteeinrichtung (24) dazu ausgebildet ist, den Brechungsindex (n) zu mehreren Zeitpunkten während des Förderns des Körpers (12) durch den Messbereich zu bestimmen, wobei die Steuereinrichtung dazu ausgebildet ist, den mindestens einen Produktionsparameter aufgrund einer zeitlichen Änderung des Brechungsindex (n) zu steuern und/oder wobei die Sendeeinrichtung dazu ausgebildet ist, Messstrahlung auf verschiedene Orte des Körpers (12) zu strahlen, wobei die Auswerteeinrichtung (24) dazu ausgebildet ist, den Brechungsindex (n) an den verschiedenen Orten des Körpers (12) zu bestimmen, und wobei die Steuereinrichtung dazu ausgebildet ist, den mindestens einen Produktionsparameter aufgrund einer räumlichen Änderung des Brechungsindex (n) zu steuern.

11. Vorrichtung nach Anspruch 10, **dadurch gekennzeichnet, dass** die Auswerteeinrichtung (24) dazu ausgebildet ist, den Brechungsindex aus einem Vergleich der Laufzeit der von der Sendeeinrichtung ausgesandten Messstrahlung durch den Messbereich bei in dem Messbereich angeordnetem Körper mit der Laufzeit der Messstrahlung durch den Messbereich ohne darin angeordneten Körper zu bestimmen.

12. Vorrichtung nach Anspruch 11, **dadurch gekennzeichnet, dass** der Körper (12) ein rohrförmiger Körper (12) ist, und dass die Auswerteeinrichtung (24) dazu ausgebildet ist, für die Bestimmung des Brechungsindex weiterhin die Laufzeit der von der Sendeeinrichtung ausgesandten Messstrahlung durch einen ersten, der Sendeeinrichtung zugewandten Wandabschnitt, und durch einen zweiten, der Sendeeinrichtung abgewandten Wandabschnitt zu berücksichtigen.

13. Vorrichtung nach einem der Ansprüche 10 bis 12, **dadurch gekennzeichnet, dass** die Auswerteeinrichtung (24) dazu ausgebildet ist, anhand der durch die Detektionseinrichtung detektierten Messstrahlung weiterhin die Absorption der Messstrahlung durch den Körper (12) zu bestimmen, wobei die Steuereinrichtung dazu ausgebildet ist, auf Grundlage der Absorptionsbestimmung mindestens einen Produktionsparameter der Produktionsanlage (32) zu steuern, wobei die Auswerteeinrichtung (24) dazu ausgebildet ist, die Absorption zu mehreren Zeitpunkten während des Förderns des Körpers (12) durch den Messbereich zu bestimmen, wobei die Steuereinrichtung dazu ausgebildet ist, den mindestens einen Produktionsparameter aufgrund einer zeitlichen Änderung der Absorption zu steuern und/oder wobei die Sendeeinrichtung dazu ausgebildet ist, Messstrahlung auf verschiedene Orte des Körpers (12) zu strahlen, wobei die Auswerteeinrichtung (24) dazu ausgebildet ist, die Absorption an den verschiedenen Orten des Körpers (12) zu bestimmen, und wobei die Steuereinrichtung dazu ausgebildet ist, den mindestens einen Produktionsparameter aufgrund einer räumlichen Änderung der Absorption zu steuern

14. Vorrichtung nach einem der Ansprüche 10 bis 13, **dadurch gekennzeichnet, dass** die Auswerteeinrichtung (24) dazu ausgebildet ist, anhand der zu mehreren Zeitpunkten während des Förderns des Körpers (12) durch den Messbereich bestimmten Werte für Brechungsindex und/oder Absorption einen Datentrend zu erstellen, und dass die Steuereinrichtung dazu ausgebildet ist, die Produktionsanlage auf Grundlage einer erkannten zeitlichen Veränderung des Datentrends zu steuern und/oder dass die Auswerteeinrichtung (24) dazu ausgebildet ist, anhand der an den verschiedenen Orten des Körpers (12) bestimmten Werte für Brechungsindex und/oder Absorption eine räumliche Werteverteilung zu erstellen, und dass die Steuereinrichtung dazu ausgebildet ist, die Produktionsanlage auf Grundlage einer erkannten räumlichen Veränderung der Werteverteilung zu steuern.

15. Vorrichtung nach einem der Ansprüche 10 bis 14, **dadurch gekennzeichnet, dass** der Körper (12) aus einem Kunststoffmaterial besteht, wobei die Produktionsanlage (32) eine Extrusionsvorrichtung zur Extrusion des Kunststoffmaterials umfasst, und dass die Steuereinrichtung dazu ausgebildet ist, auf Grundlage der Brechungsindexbestimmung und/oder der Absorptionsbestimmung mindestens einen Produktionsparameter der Extrusionsvorrichtung zu steuern.

16. Vorrichtung nach Anspruch 15, **dadurch gekennzeichnet, dass** mindestens ein Produktionsparameter eine Ausstoßleistung der Extrusionsvorrichtung ist und/oder dass mindestens ein Produktionsparameter ein Mischungsverhältnis von mindestens zwei der Extrusionsvorrichtung zugeführten zu extrudierenden Materialien ist.

17. Vorrichtung nach einem der Ansprüche 10 bis 16, **dadurch gekennzeichnet, dass** die Steuereinrichtung eine Regeleinrichtung (28) bildet, die dazu ausgebildet ist, den mindestens einen Produktionsparameter der Produktionsanlage (32) auf Grundlage der Brechungsindexbestimmung und/oder der Absorptionsbestimmung in einem geschlossenen Regelkreis zu regeln.

## Claims

1. Method for controlling a production plant (32) for plate-shaped or strand-shaped bodies (12), in which the body (12) is conveyed along a direction of flow through a measurement area, in which the body (12) is exposed in the measurement area to measurement radiation in the gigahertz or terahertz frequency range, wherein the measurement radiation penetrates at least partially into the body (12), and in which measurement radiation reflected by the body (12) is detected, **characterized in that** the refractive index (n) of the body (12) is determined based on the detected measurement radiation without gravimetric or volumetric measurements, **in that** at least one production parameter of the production plant (32) is controlled based on the refractive index determination, wherein the refractive index (n) is determined at several points in time while the body (12) is conveyed through the measurement area and the at least one production parameter is controlled based on a change of the refractive index (n) over time and/or wherein different locations of the body (12) are exposed to measurement radiation, wherein the refractive index (n) is determined at the different locations of the body (12) and the at least one production parameter is controlled based on a spatial change of the refractive index (n).

2. Method according to claim 1, **characterized in that** the refractive index is determined from a comparison of the runtime of the measurement radiation emitted by the transmitting device through the measurement area with a body arranged in the measurement area with the runtime of the measurement radiation through the measurement area without a body arranged therein.

3. Method according to claim 2, **characterized in that** the body (12) is a tubular body (12), and **in that**, for determining the refractive index, the runtime of the measurement radiation emitted by the transmitting device through a first wall section facing the transmitting device and through a second wall section facing away from the transmitting device is furthermore taken into account.

4. Method according to one of the preceding claims, **characterized in that** the absorption of the measurement radiation by the body (12) is also determined based on the detected measurement radiation, **characterized in that** at least one production parameter of the production plant (32) is controlled based on the absorption determination, wherein the absorption is determined at several points in time while the body (12) is conveyed through the measurement area and the at least one production parameter is controlled based on a temporal change of the absorption and/or wherein different locations of the body (12) are exposed to measurement radiation, wherein the absorption is determined at the different locations of the body (12) and the at least one production parameter is controlled based on a spatial change of the absorption.

5. Method according to one of the preceding claims, **characterized in that** a data trend is created based on the values of the refractive index and/or absorption determined at several points in time while conveying the body (12) through the measurement area, and **in that** the production plant is controlled based on a detected change over time in the data trend, and/or **in that** a spatial value distribution is created based on the values for the refractive index and/or absorption determined at the different locations of the body (12), and **in that** the production plant is controlled based on a detected spatial change of the value distribution.

6. Method according to one of the preceding claims, **characterized in that** the body (12) is made of a plastic material, wherein the production plant (32) comprises an extrusion device for extruding the plastic material, and **in that** at least one production parameter of the extrusion device is controlled based on the refractive index determination and/or the absorption determination.

7. Method according to claim 6, **characterized in that** a delivery rate of the extrusion device is controlled as a production parameter and/or **in that** a mixing ratio of at least two materials fed to the extrusion device and to be extruded is controlled as a production parameter.

8. Method according to one of the preceding claims, **characterized in that** a proportion of an additive added to the material used for the production of the body (12) is determined based on the determined values of the refractive index and/or absorption, and **in that** the production plant is controlled based on the determined proportion of the additive.

9. Method according to one of the preceding claims, **characterized in that** the at least one production parameter of the production plant (32) is controlled in a closed-loop control system based on the refractive index determination and/or the absorption determination.

10. Device for controlling a production plant (32) for plate-shaped or strand-shaped bodies (12), comprising a conveyor for conveying the body (12) along a direction of flow through a measurement area of the device, a transmitting device for emitting measurement radiation in the gigahertz or terahertz frequency range onto the body (12) in the measurement area, wherein the measurement radiation penetrates at least partially into the body (12), a detection device for detecting the measurement radiation reflected by the body (12) and an evaluation device (24), **characterized in that** the evaluation device (24) is adapted to determine the refractive index (n) of the body (12) based on the measurement radiation detected by the detection device without gravimetric or volumetric measurements, **in that** a control device is provided which is adapted to control at least one production parameter of the production plant (32) based on the refractive index determination, wherein the evaluation device (24) is adapted to determine the refractive index (n) at several points in time while the body (12) is conveyed through the measurement area, wherein the control device is adapted to control the at least one production parameter based on a change of the refractive index (n) over time and/or wherein the transmitting device is adapted to emit measurement radiation onto different locations of the body (12), wherein the evaluation device (24) is adapted to determine the refractive index (n) at the different locations of the body (12), and wherein the control device is adapted to control the at least one production parameter based on a spatial change in the refractive index (n).

11. Device according to claim 10, **characterized in that** the evaluation device (24) is adapted to determine the refractive index from a comparison of the runtime of the measurement radiation emitted by the transmitting device through the measurement area with a body arranged in the measurement area with the runtime of the measurement radiation through the measurement area without a body arranged therein.

12. Device according to claim 11, **characterized in that** the body (12) is a tubular body (12), and **in that**, for determining the refractive index, the evaluation device (24) is adapted to furthermore take into account the runtime of the measurement radiation emitted by the transmitting device through a first wall section facing the transmitting device and through a second wall section facing away from the transmitting device.

13. Device according to one of claims 10 to 12, **characterized in that** the evaluation device (24) is adapted to further determine the absorption of the measurement radiation by the body (12) based on the measurement radiation detected by the detection device, wherein the control device is adapted to control at least one production parameter of the production plant (32) based on the absorption determination, wherein the evaluation device (24) is adapted to determine the absorption at several points in time while the body (12) is conveyed through the measurement area, wherein the control device is adapted to control the at least one production parameter based on a temporal change of the absorption and/or wherein the transmitting device is adapted to emit measurement radiation onto different locations of the body (12), wherein the evaluation device (24) is adapted to determine the absorption at the different locations of the body (12), and wherein the control device is adapted to control the at least one production parameter based on a spatial change of the absorption

14. Device according to one of claims 10 to 13, **characterized in that** the evaluation device (24) is adapted to create a data trend based on the values for the refractive index and/or absorption determined at several of points in time while the body (12) is conveyed through the measurement area, and **in that** the control device is adapted to control the production plant based on a detected change over time of the data trend and/or that the evaluation device (24) is adapted to create a spatial value distribution based on the values for the refractive index and/or absorption determined at the different locations of the body (12), and **in that** the control device is adapted to control the production plant based on a detected spatial change of the value distribution.

15. The device according to any one of claims 10 to 14, **characterized in that** the body (12) is made of a plastic material, wherein the production plant (32) comprises an extrusion device for extruding the plastic material, and **in that** the control device is adapted to control at least one production parameter of the extrusion device based on the refractive index determination and/or the absorption determination.

16. Device according to claim 15, **characterized in that** at least one production parameter is a delivery rate of the extrusion device and/or **in that** at least one production parameter is a mixing ratio of at least two materials fed to the extrusion device and to be extruded.

17. Device according to any one of claims 10 to 16, **characterized in that** the control device forms a control device (28) which is adapted to control the at least one production parameter of the production plant (32) based on the refractive index determination and/or the absorption determination in a closed-loop control.

## Revendications

1. Procédé de commande d'une installation de production (32) de corps en forme de plaques ou de torons (12), dans lequel le corps (12) est transporté le long d'une direction de transport à travers une zone de mesure, dans lequel le corps (12) est irradié dans la zone de mesure au moyen d'un rayonnement de mesure dans la plage de fréquence des gigahertz ou des térahertz, dans lequel le rayonnement de mesure pénètre au moins partiellement dans le corps (12), et dans lequel le rayonnement de mesure réfléchi par le corps (12) est détecté, **caractérisé en ce que** l'indice de réfraction (n) du corps (12) est déterminé sans mesures gravimétriques ou volumétriques à l'aide du rayonnement de mesure détecté, **en ce qu'**au moins un paramètre de production de l'installation de production (32) est commandé sur la base de la détermination de l'indice de réfraction, dans lequel l'indice de réfraction (n) est déterminé à plusieurs moments pendant le transport du corps (12) à travers la zone de mesure et l'au moins un paramètre de production est commandé en fonction d'une modification temporelle de l'indice de réfraction (n) et/ou dans lequel le rayonnement de mesure est émis vers différents endroits du corps (12), dans lequel l'indice de réfraction (n) est déterminé aux différents endroits du corps (12) et l'au moins un paramètre de production est commandé en fonction d'une modification spatiale de l'indice de réfraction (n).

2. Procédé selon la revendication 1, **caractérisé en ce que** l'indice de réfraction est déterminé à partir d'une comparaison du temps de propagation du rayonnement de mesure émis par le moyen d'émission à travers la zone de mesure lorsque le corps est disposé dans la zone de mesure avec le temps de propagation du rayonnement de mesure à travers la zone de mesure lorsque le corps n'est pas disposé dans celle-ci.

3. Procédé selon la revendication 2, **caractérisé en ce que** le corps (12) est un corps tubulaire (12), et **en ce que** la détermination de l'indice de réfraction prend également en compte le temps de propagation du rayonnement de mesure émis par le moyen d'émission à travers une première section de paroi tournée vers le moyen d'émission et à travers une deuxième section de paroi opposée au moyen d'émission.

4. Procédé selon l'une des revendications précédentes, **caractérisé en ce que** l'absorption du rayonnement de mesure par le corps (12) est également déterminée à l'aide du rayonnement de mesure détecté, **caractérisé en ce qu'**au moins un paramètre de production de l'installation de production (32) est commandé sur la base de la détermination de l'absorption, dans lequel l'absorption est déterminée à plusieurs moments pendant le transport du corps (12) à travers la zone de mesure et l'au moins un paramètre de production est commandé en fonction d'une modification temporelle de l'absorption et/ou dans lequel le rayonnement de mesure est émis vers différents endroits du corps (12), dans lequel l'absorption est déterminée aux différents endroits du corps (12) et l'au moins un paramètre de production est commandé en fonction d'une modification spatiale de l'absorption.

5. Procédé selon l'une des revendications précédentes, **caractérisé en ce qu'**une tendance des données est établie à l'aide des valeurs déterminées pour l'indice de réfraction et/ou l'absorption à plusieurs moments pendant le transport du corps (12) à travers la zone de mesure, et **en ce que** l'installation de production est commandée sur la base d'une modification temporelle identifiée de la tendance des données et/ou **en ce qu'**une répartition spatiale des valeurs est établie à l'aide des valeurs déterminées pour l'indice de réfraction et/ou l'absorption aux différents endroits du corps (12), et **en ce que** l'installation de production est commandée sur la base d'une modification spatiale identifiée de la répartition des valeurs.

6. Procédé selon l'une des revendications précédentes, **caractérisé en ce que** le corps (12) est constitué d'une matière plastique, dans lequel l'installation de production (32) comporte un dispositif d'extrusion pour l'extrusion de la matière plastique, et **en ce qu'**au moins un paramètre de production du dispositif d'extrusion est commandé sur la base de la détermination de l'indice de réfraction et/ou de la détermination de l'absorption.

7. Procédé selon la revendication 6, **caractérisé en ce qu'**un rendement du dispositif d'extrusion est commandé en tant que paramètre de production et/ou un rapport de mélange d'au moins deux matières à extruder alimentées vers le dispositif d'extrusion est commandé en tant que paramètre de production.

8. Procédé selon l'une des revendications précédentes, **caractérisé en ce qu'**une part d'un adjuvant ajouté à la matière utilisée pour la production du corps (12) est déterminée à l'aide des valeurs déterminées pour l'indice de réfraction et/ou l'absorption, et **en ce que** l'installation de production est commandée sur la base de la part déterminée de l'adjuvant.

9. Procédé selon l'une des revendications précédentes, **caractérisé en ce que** l'au moins un paramètre de production de l'installation de production (32) est réglé dans un circuit fermé sur la base de la détermination de l'indice de réfraction et/ou de la détermination de l'absorption.

10. Dispositif de commande d'une installation de production (32) de corps en forme de plaques ou de torons (12), comportant un moyen de transport destiné à transporter le corps (12) le long d'une direction de transport à travers une zone de mesure du dispositif, un moyen d'émission destiné à irradier le corps (12) dans la zone de mesure avec un rayonnement de mesure dans la plage de fréquence des gigahertz ou des térahertz, dans lequel le rayonnement de mesure pénètre au moins partiellement dans le corps (12), un moyen de détection destiné à détecter le rayonnement de mesure réfléchi par le corps (12) et un moyen d'évaluation (24), **caractérisé en ce que** le moyen d'évaluation (24) est conçu pour déterminer l'indice de réfraction (n) du corps (12) à l'aide du rayonnement de mesure détecté par le moyen de détection sans mesures gravimétriques ou volumétriques, **en ce qu'**il est prévu un moyen de commande conçu pour commander au moins un paramètre de production de l'installation de production (32) sur la base de la détermination de l'indice de réfraction, dans lequel le moyen d'évaluation (24) est conçu pour déterminer l'indice de réfraction (n) à plusieurs moments pendant le transport du corps (12) à travers la zone de mesure, dans lequel le moyen de commande est conçu pour commander l'au moins un paramètre de production en fonction d'une modification temporelle de l'indice de réfraction (n) et/ou dans lequel le moyen d'émission est conçu pour émettre le rayonnement de mesure vers différents endroits du corps (12), dans lequel le moyen d'évaluation (24) est conçu pour déterminer l'indice de réfraction (n) aux différents endroits du corps (12), et dans lequel le moyen de commande est conçu pour commander l'au moins un paramètre de production en fonction d'une modification spatiale de l'indice de réfraction (n).

11. Dispositif selon la revendication 10, **caractérisé en ce que** le moyen d'évaluation (24) est conçu pour déterminer l'indice de réfraction à partir d'une comparaison du temps de propagation du rayonnement de mesure émis par le moyen d'émission à travers la zone de mesure lorsque le corps est disposé dans la zone de mesure avec le temps de propagation du rayonnement de mesure à travers la zone de mesure lorsque le corps n'est pas disposé dans celle-ci.

12. Dispositif selon la revendication 11, **caractérisé en ce que** le corps (12) est un corps tubulaire (12), et **en ce que** pour la détermination de l'indice de réfraction, le moyen d'évaluation (24) est conçu pour prendre également en compte le temps de propagation du rayonnement de mesure émis par le moyen d'émission à travers une première section de paroi tournée vers le moyen d'émission et à travers une deuxième section de paroi opposée au moyen d'émission.

13. Dispositif selon l'une des revendications 10 à 12, **caractérisé en ce que** le moyen d'évaluation (24) est conçu pour déterminer également l'absorption du rayonnement de mesure par le corps (12) à l'aide du rayonnement de mesure détecté par le moyen de détection, dans lequel le moyen de commande est conçu pour commander au moins un paramètre de production de l'installation de production (32) sur la base de la détermination de l'absorption, dans lequel le moyen d'évaluation (24) est conçu pour déterminer l'absorption à plusieurs moments pendant le transport du corps (12) à travers la zone de mesure, dans lequel le moyen de commande est conçu pour commander l'au moins un paramètre de production en fonction d'une modification temporelle de l'absorption et/ou dans lequel le moyen d'émission est conçu pour émettre le rayonnement de mesure vers différents endroits du corps (12), dans lequel le moyen d'évaluation (24) est conçu pour déterminer l'absorption aux différents endroits du corps (12), et dans lequel le moyen de commande est conçu pour commander l'au moins un paramètre de production en fonction d'une modification spatiale de l'absorption.

14. Dispositif selon l'une des revendications 10 à 13, **caractérisé en ce que** le moyen d'évaluation (24) est conçu pour établir une tendance des données à l'aide des valeurs déterminées pour l'indice de réfraction et/ou l'absorption à plusieurs moments pendant le transport du corps (12) à travers la zone de mesure, et **en ce que** le moyen de commande est conçu pour commander l'installation de production sur la base d'une modification temporelle identifiée de la tendance des données et/ou **en ce que** le moyen d'évaluation (24) est conçu pour établir une répartition spatiale des valeurs à l'aide des valeurs déterminées pour l'indice de réfraction et/ou l'absorption aux différents endroits du corps (12), et **en ce que** le moyen de commande est conçu pour commander l'installation de production sur la base d'une modification spatiale identifiée de la répartition des valeurs.

15. Dispositif selon l'une des revendications 10 à 14, **caractérisé en ce que** le corps (12) est constitué d'une matière plastique, dans lequel l'installation de production (32) comporte un dispositif d'extrusion pour l'extrusion de la matière plastique, et **en ce que** le moyen de commande est conçu pour commander au moins un paramètre de production du dispositif d'extrusion sur la base de la détermination de l'indice de réfraction et/ou de la détermination de l'absorption.

16. Dispositif selon la revendication 15, **caractérisé en ce qu'**au moins un paramètre de production est un rendement du dispositif d'extrusion et/ou **en ce qu'**au moins un paramètre de production est un rapport de mélange d'au moins deux matières à extruder alimentées vers le dispositif d'extrusion.

17. Dispositif selon l'une des revendications 10 à 16, **caractérisé en ce que** le moyen de commande forme un moyen de réglage (28), lequel est conçu pour régler l'au moins un paramètre de production de l'installation de production (32) dans un circuit fermé sur la base de la détermination de l'indice de réfraction et/ou de la détermination de l'absorption.

Fig. 1

Fig. 2

Fig. 3

**IN DER BESCHREIBUNG AUFGEFÜHRTE DOKUMENTE**

**In der Beschreibung aufgeführte Patentdokumente**

- DE 102016103298 A1
- WO 2016139155 A1
- DE 202018006144 U1
- DE 102015110600 B3
- US 20090045536 A1
- WO 2013007250 A1

**In der Beschreibung aufgeführte Nicht-Patentliteratur**

- **WIETZKE S et al.** *Terahertz spectroscopy: A powerful tool for the characterization of plastic materials*
- **J. HAUCK et al.** *Terahertz inline wall thickness monitoring system for plastic pipe extrusion*